# EUROPÄISCHE PATENTSCHRIFT

(11) **EP 2 818 890 B1**
(45) Veröffentlichungstag und Bekanntmachung des Hinweises auf die Patenterteilung: **02.10.2019**
(21) Anmeldenummer: 14000243.7
(22) Anmeldetag: 23.01.2014
(51) Int. Cl.: G01S 7/40, G01S 13/93, G01S 7/02

(54) **Prüfanordnung zur Sicherstellung der Funktionssicherheit eines an der Front oder am Heck eines Kraftfahrzeugs verbauten Radarsensors**
Test assembly for ensuring the functional reliability of a radar sensor installed at the front or at the rear of a motor vehicle
Dispositif de contrôle destiné à garantir la sécurité de fonctionnement d'un capteur radar monté sur l'avant ou sur l'arrière d'un véhicule automobile

(30) Priorität: 29.06.2013 DE 102013010922
(43) Veröffentlichungstag der Anmeldung: 31.12.2014
(73) Patentinhaber: MAN Truck & Bus SE, 80995 München (DE)
(72) Erfinder: Körner, Tobias, 86420 Diedorf (DE); Hoffmann, Guido, 82216 Maisach (DE)
(74) Vertreter: Liebl, Thomas

(56) Entgegenhaltungen:
- DE-A1- 10 042 105
- DE-A1- 10 107 219
- DE-A1- 19 642 811
- DE-A1-102009 009 046
- DE-B3-102004 026 044
- DE-C1- 19 857 871

## Beschreibung

Gegenstand der Erfindung ist eine Prüfanordnung zur Sicherstellung der Funktionssicherheit eines an der Front oder am Heck eines Kraftfahrzeugs verbauten Radarsensors, im Produktionsprozess des Kraftfahrzeugs, sowie ein Verfahren zum Betreiben der Prüfanordnung.

Im Produktionsprozess von Kraftfahrzeugen wirft die Funktionsprüfung von im Kraftfahrzeug verbauten Radarsensoren eine Reihe von Problemen auf. Einerseits soll eine vollständige Funktionsprüfung durchgeführt werden, die die Justage und die eigentliche Funktionsprüfung umfasst, um bereits im Produktionsprozess nicht ordnungsgemäß funktionsfähige Radarsensoren zu identifizieren und auszutauschen. Andererseits darf aus Gründen der Arbeitssicherheit das in der Produktion beschäftigte Personal der von Radarsensoren verursachte Mikrowellenstrahlung nicht in einem gesundheitsgefährdenden Maße ausgesetzt werden. Weiter besteht ein Risiko, dass das von den Radarsensoren verursachte Mikrowellenrauschen andere Teile des Produktionsprozesses stört. Neben diesen durch die Abgabe von Radarstrahlen verursachten Problemen ist durch die räumlich Enge beim Produktionsprozess eine Funktionsprüfung von in einem Kraftfahrzeug verbauten Radarsensoren unter Feldbedingungen nicht möglich.

Im Rahmen des vorstehend dargelegten Problemgemenges ist es aus der DE 198 57 871 C1 bekannt eine Anordnung vorzusehen, bei der an der Hinterachse benachbart zu den Hinterrädern eines Kraftfahrzeugs zwei Winkelgeber angeordnet sind, die mit zwei Winkelgebern eines vor dem Fahrzeug angeordneten Gestells zusammenwirken derart, dass dieses senkrecht zur Längsachse des Fahrzeugs und in einer definierten Position zu diesem angeordnet werden kann. Das Gestell selbst weist einen an diesem angeordneten Laser auf. Der Strahl dieses Lasers zeigt auf einen an dem Radarsensor angeordneten Spiegel. Die Einstellung des Radarsensors erfolgt mittels an diesem angeordneten Justagemitteln in der Weise, dass durch deren Verstellung der vom Spiegel reflektierte Laserstrahl mit einem Referenzpunkt an der Traverse zur Deckung gebracht wird. Die beschriebene Anordnung lässt zwar eine Justage des Lasersensors zu nicht jedoch eine Funktionsprüfung.

Weiter beschreibt die DE 101 07 219 C1 ein Verfahren zur Funktionsprüfung eines Radarsensors. Dort ist vorgesehen, dass sich das Diagnoseverfahren erst nach erfolgter Justage des Radarsensors aktivieren lässt. Die eigentliche Funktionsprüfung erfolgt erst im Fahrbetrieb.

Aufgabe der Erfindung ist es, eine Anordnung anzugeben, die es erlaubt einen an einem Kraftfahrzeug verbauten Radarsensor im nicht eingeschalteten Zustand zu justieren und erst danach eine Funktionskontrolle vorzunehmen, wobei die Einschaltdauer des Radarsensors in der Produktion auf ein Minimum reduziert wird.

Weiter gehört es zur Aufgabe, ein Verfahren zur Funktionsprüfung eines an einem Kraftfahrzeug verbauten Radarsensors anzugeben, das ganz oder teilweise automatisiert durchführbar ist.

Gelöst wird die Aufgabe durch ein Verfahren mit den kennzeichnenden Merkmalen gemäß Anspruch 1. Vorteilhafte Weiterbildungen der Erfindung sind in den jeweils abhängigen Ansprüchen gekennzeichnet.

Bei der Lösung der Aufgabe wird von einem Radarsensor ausgegangen, der eine Sperre enthält, die das Aussenden von Radarstrahlen erst dann zulässt wenn der Radarsensor in Bezug zum Kraftfahrzeug justiert ist. Ein so ausgebildeter Radarsensor verhindert in vorteilhafter Weise zuverlässig, dass im Produktionsprozess, bereits nach dem elektrischen Anschließen des Radarsensors, dieser unkontrolliert Radarstrahlung emittiert.

Um eine Justage der Prüfanordnung zu ermöglichen ist in einer maßlich definierten Zuordnung zur Drehachse einer nicht gelenkten Achse des Kraftfahrzeugs, jeweils zu beiden Seiten des Kraftfahrzeugs, jeweils eine Laserquelle angeordnet. Diese Laserquellen sind senkrecht zur Erstreckungsrichtung der Drehachse auf eine vor der Fahrzeugfront oder hinter dem Fahrzeugheck angebrachten in ihrer Ausrichtung zum Kraftfahrzeug verstellbaren Traverse gerichtet. An der Traverse befinden sich erste Zielmarken, die mit den Laserquellen vorteilhaft so zusammenwirkt, dass die Traverse exakt zur Drehachse und zu den Laserquellen ausrichtbar ist. So ist die für den eigentlichen Prüfvorgang notwendige Position der Traverse, einerseits parallel zur Drehachse und andererseits so, dass sich ein definierter Bereich der Traverse zwischen den Laserquellen befindet, einfach und damit vorteilhaft erreichbar. Die Ausrichtung der Traverse geschieht dabei mittels manueller oder motorischer Beaufschlagung von Einstellmittel, die die Position der Traverse horizontal und bedarfsweise auch vertikal verändern.

Um die Justierung des Radarsensors selbst zu ermöglichen, sind an der Traverse erste Justiermittel gestellfest angeordnet, die mit an dem Radarsensor angeordneten zweiten Justiermittel zusammenwirken. Die ersten und zweiten Justagemittel sind dabei so ausgebildet, dass der Radarsensor im ausgeschalteten Zustand exakt so zum Kraftfahrzeug ausrichtbar ist, dass im späteren Betrieb des Radarsensors eine vorgegebene Abstrahlcharakteristik erreicht wird. Mit Hilfe der ersten und weiten Justagemittel lässt sich der Radarsensor einfach und damit vorteilhaft in eine exakt definierte Lage zur Traverse und damit zur erwähnten Drehachse bringen. Er nimmt damit in einer Produktionsserie nach erfolgter Justage eine immer gleiche Position und Ausrichtung relativ zum Kraftfahrzeug ein.

Um nun festzustellen ob der Radarsensor tatsächlich funktioniert, bedarf es einer Prüfung unter simulierten Bedingungen, weil sich das Kraftfahrzeug ja noch im Produktionsprozess befindet, eine Prüfung unter echten Fahrbedingungen also nicht möglich ist. Zu diesem Zweck ist in vorteilhafter Weise an der Traverse in einem definierten Abstand und einer definierten richtungsmäßigen Orientierung zum Strahlungszentrum des justierten Radarsensors wenigstens ein Radarreflektor mit definierter Rückstrahlcharakteristik angeordnet.

Für die eigentliche Prüfung des Radarsensors ist es notwendig in der Prüfanordnung erster Mittel vorzusehen, mit deren Hilfe nach erfolgter Justierung des Radarsensors die Sperre, die das Aussenden von Radarstrahlen verhindert, aufhebbar ist. Weiter muss die Prüfanordnung zweite Mittel enthalten die vergleichen, ob das von dem wenigstens einen Radarreflektor auf den Radarsensor zurückreflektierte und von diesem empfangene Radarecho in einem zulässigen Bereich liegt. Die vorstehend angesprochenen Mittel lassen sich durch eine programmierbare Steuereinheit realisieren, die mit dem Radarsensor verbindbar ist.

Um von dem Vergleich Maßnahmen abzuleiten bedarf es dritter Mittel, die den Radarsensor, dann wenn das vom Radarsensor empfangene Radarecho in einem zulässigen Bereich liegt, in einen Bereitschaftszustand schalten, in dem der Radarsensor keine Radarstrahlen aussendet, aber von der Steuerung des Kraftfahrzeugs aktivierbar ist. Damit wird in vorteilhafter Weise erreicht, dass auch im weiteren Produktionsprozess keine Radarstrahlung emittiert wird, die Betriebsfähigkeit des Radarsensors beim ersten Aktivieren eines Fahrerassistenzsystems jedoch ohne weitere Maßnahmen herstellbar ist. Die angesprochenen dritten Mittel bewirken weiter, dass der Radarsensor in einen nicht von der Steuerung des Kraftfahrzeugs aktivierbaren Zustand schaltet, wenn das vom Radarsensor empfangene Radarecho in einem nicht zulässigen Bereich liegt. Hierdurch wird zuverlässig und damit vorteilhaft verhindert, dass eine unzureichend oder nicht gegebene Funktionsfähigkeit des Radarsensors unerkannt bleibt und ein Kraftfahrzeug mit einem solchen Sensor die Produktion verlässt. In einem solchen Fall des nicht ordnungsgemäßen Funktionierens des Radarsensors ist es weiter von Vorteil eine Information im Radarsensor oder in der Steuerung des Kraftfahrzeugs zu speichern, die beim Starten mit einem optischen oder akustischen Warnsignal auf die fehlende Funktionsfähigkeit des Radarsensors hinweist und alle Systeme des Kraftfahrzeugs blockiert, die auf die Daten des Radarsensors zugreifen. Auch die dritten Mittel können durch eine programmierbare Steuereinheit gebildet sein, die auch die ersten und zweiten Mittel realisiert.

Unter programmierbarer Steuereinheit wird dabei ganz allgemein eine elektronische Einheit verstanden, die in der Lage ist, Eingangssignale mittels Programmbefehlen, die ihr von einem Speicherelement zur Verfügung gestellt werden, zu verarbeiten und in Ausgangssignale überzuführen. Die programmierte Steuereinheit kann dabei auch durch die Steuerung des Kraftfahrzeugs gebildet sein, die heute üblicherweise als Fahrzeugrechner ausgebildet ist. In diesem Fall ist der Fahrzeugrechner in einen Prüfmodus versetzbar, der nur für Service-Zwecke zugänglich ist und weist eine Schnittstelle zur Prüfanordnung auf.

In Weiterbildung der Prüfanordnung ist es vorteilhaft, an der Traverse jeweils in einem definierten Abstand und jeweils einer definierten richtungsmäßigen Orientierung zum Strahlungszentrum des Radarsensors mehrere Radarreflektoren mit definierter Rückstrahlcharakteristik anzuordnen. Dadurch lässt sich erreichen, dass die horizontale Auflösung des Radarsensors überprüft werden kann.

Weiter besteht die Möglichkeit, die Prüfanordnung so auszubilden, dass die Radarreflektoren unterschiedliche Rückstrahlcharakteristiken aufweisen. Diese Maßnahme ermöglicht vorteilhaft, Radarziele sowohl in definierter richtunsmäßigen Orientierung zum Strahlungszentrum des Radarsensors als auch in unterschiedlicher Entfernung zu simulieren. Dabei lässt sich die Rückstrahlcharakteristik der Radarreflektoren durch unterschiedliche, definierte Formen, unterschiedliche Größen oder unterschiedliche Materialien erreichen. Im einfachsten Fall handelt es sich bei den Radarreflektoren um Tripel-Spiegel.

Zur Realisierung der Justageanordnung für den Radarsensor ist es von Vorteil, ersten Justagemittel in Form einer Laserstrahlungsquelle und einer zweiten Zielmarke an der Traverse vorzusehen und die zweiten Justagemittel als einen gestellfest mit dem Lasersensor verbundenen Spiegel auszubilden. Selbstverständlich lässt sich diese Anordnung auch umkehren, dergestalt, dass die ersten Justagemittel durch eine gestellfest an der Traverse angeordnete Zielmarke gebildet sind und die zweiten Justagemittel aus einer gestellfest am Radarsensor anbringbaren oder bereits angebrachten Laserquelle bestehen.

Um den Prüfvorgang weitgehend zu automatisieren, ist es vorteilhaft, die zweite Zielmarke mit einem lichtempfindlichen Element auszustatten, das beim Einfall des Laserstrahls ein elektrisches Signal abgibt. Auf diese Weise wird die Möglichkeit geschaffen, den Justagevorgang automatisch als erfolgreich beendet zu signalisieren, wenn der Ausgangspegel des lichtempfindlichen Elements einen vorgegebenen Ausgangspegel erreicht hat.

Entsprechend kann vorgegangen werden, um die Einstellung der Traverse zum Kraftfahrzeug zu automatisieren. Hierzu umfassen die ersten Zielmarken je ein lichtempfindliches Element, das beim Einfall des Laserstrahls ein elektrisches Signal abgibt. Der Justagevorgang kann dann automatisch als erfolgreich beendet signalisiert werden, wenn der Ausgangspegel der lichtempfindlichen Elemente einen vorgegebenen Ausgangspegel erreicht hat.

In Weiterbildung der Prüfanordnung ist es von Vorteil, dass die ersten Laserquellen und oder die zweite Laserquelle eine Längenmesseinrichtung mit umfassen. Auf diese Weise lässt sich erreichen, dass eine exakte Einstellung des Abstandes zwischen den ersten Justagemitteln an der Traverse und den zweiten Justagemitteln am Radarsensor komfortabel möglich wird.

Zur Sicherstellung der Funktionssicherheit eines an der Front oder am Heck eines Kraftfahrzeugs verbauten Radarsensors sind eine Reihe von Verfahrensschritten notwendig. In einem ersten Verfahrensschritt ist die Traverse mittels der Laserquellen einerseits und der ersten Zielmarken an der Traverse andererseits so auszurichten, dass die Traverse eine Position parallel zur Drehachse einer nicht gelenkten Achse des Kraftfahrzeugs einnimmt und die an der Traverse angeordneten ersten Justiermittel einem vorbestimmten Punkt des Kraftfahrzeugs gegenüber liegen. Ist dies gegeben, wird in einem zweiten Verfahrensschritt mittels der ersten Justiermittel an der Traverse und der zweiten Justiermittel an dem Radarsensor, der Radarsensor so justiert, dass er eine exakt definierte Position gegenüber der Traverse einnimmt. Um eine Überprüfung der Funktionsfähigkeit des Radarsensors vornehmen zu können, wird in einem dritten Verfahrensschritt mittels in der Prüfanordnung enthaltener erster Mittel die Einschaltsperre des Radarsensors aufgehoben, derart, dass der Radarsensor in Betrieb gesetzt wird und Radarstrahlen aussendet. Bei diesen ersten Mitteln kann es sich wie oben bereits ausgeführt um eine programmierbare Steuereinheit handeln. In einem vierten Verfahrensschritt wird sodann mit Hilfe in der Prüfanordnung enthaltener zweiter Mittel das von dem wenigstens einen an der Traverse angeordneten Radarreflektor auf den Radarsensor zurückreflektierte und von diesem empfangene Radarecho dahingehend überprüft wird, ob es in einem vorgegebenen Toleranzbereich liegt und der Radarsensor dann wenn das empfangene Radarecho in einem vorgegebenen Toleranzbereich liegt, mit Hilfe dritter Mittel in einen Bereitschaftszustand geschaltet, in dem der Radarsensor keine Radarstrahlen aussendet, aber von der Steuerung des Kraftfahrzeugs aktivierbar ist und der Radarsensor in einen nicht von der Steuerung des Kraftfahrzeugs aktivierbaren Zustand geschalten wird, wenn das vom Radarsensor empfangene Radarecho nicht im zulässigen Toleranzbereich liegt.

Mit dem vorstehend beschriebenen Verfahren lässt sich vorteilhaft sicherstellen, dass nicht funktionsfähige Radarsensoren sicher im Produktionsprozess identifiziert werden können. Auf diese Weise sind unverhältnismäßig teure Nacharbeiten außerhalb des Produktionsprozesses vorteilhaft vermeidbar.

Zur weiteren Steigerung der Verfahrenssicherheit durch das Ausschalten eventueller Fehlerquellen können mit der oben beschriebenen Anordnung Verfahrensschritte oder das gesamte Verfahren automatisiert werden.

Zunächst besteht die Möglichkeit, die Justage der Traverse zu automatisieren. Um dies zu ermöglichen ist vorgesehen, dass die ersten Zielmarken je ein lichtempfindliches Element umfassen, das beim Einfall des Laserstrahls ein zum Beispiel dem Lichteinfall proportionales elektrisches Signal abgibt. Weiter ist vorgesehen, dass die Traverse mittels Stellmotoren horizontal verstellbar ist. Durch einen in der Prüfanordnung vorgesehenen Regelmechanismus, der die Signale der lichtempfindlichen Elemente als Eingangssignale verwendet, lassen sich die Stellmotoren durch diesen dann so ansteuern, dass die elektrischen Signale der lichtempfindlichen Elemente ein Maximum erreichen. Selbstverständlich können auch ergänzend Stellantriebe vorgesehen sein, die eine vertikale Justage der Traverse erlauben, dies dürfte aber im Regelfall nicht notwendig sein weil sich sicherstellen lässt, dass die Laserquellen einerseits und die Traverse andererseits an ihrem Aufstellungsort in der Produktion vertikal zueinander justiert sind. Bei Erreichen des Maximums oder gegebenenfalls eines vorgegebenen Signalpegels kann die Justage als erfolgreich beendet definiert werden. Bei Erreichen dieses Zustandes können durch entsprechende in der Prüfanordnung enthaltene Steuermittel die nachfolgenden Verfahrensschritte freigegeben werden.

Weiter ist es vorteilhaft eine automatische Justageerkennung für den Radarsensor vorzusehen. Dazu ist der zweiten Zielmarke ein lichtempfindliches Element zugeordnet, das beim Einfall des Laserstrahls ein zum Beispiel dem Lichteinfall proportionales elektrisches Signal abgibt. Dieses Ausgangssignal des lichtempfindlichen Elementes wird hinsichtlich zum Beispiel des Signalpegels mit Hilfe der in der Prüfanordnung enthaltenen Mittel, zum Beispiel durch Vergleich mit einem Speicherwert überwacht. Bei Vorliegen eines vorgegebenen Signalpegels ist die Justage erfolgreich beendet und die Einschaltsperre des Radarsensors wird automatisch aufgehoben und die weitere Prüfprozedur wird freigegeben.

Der vorstehend gewählten Begriffe "lichtempfindliches Element" bzw. "lichtempfindliche Elemente" sind aus Gründen der sprachlichen Vereinfachung gewählt und nicht als Einschränkung zu verstehen. Selbstverständlich ist es möglich auch aus mehreren Einzelelementen bestehende zeilenförmig oder flächig als Felder ausgebildete lichtempfindliche Elemente bzw. Sensoren zu verwenden. In einem solchen Fall wird man die Stellantriebe zum Beispiel der Traverse natürlich nicht auf das Erreichen eines Maximalpegels des Ausgangssignals des lichtempfindlichen Elementes ansteuern, sondern so, dass der Laserstrahl eine bestimmten vorgegebene Lage in der Zeile oder dem Feld erreicht. Dies lässt sich so bewerkstelligen, dass den einzelnen Elementen Koordinaten zugeordnet werden und die Ansteuerung so erfolgt, dass der Laserstrahl sich der Soll-Koordinate, also dem Element bei dem die Justage erfolgreich beendet ist, annähert und dieses schließlich beaufschlagt.

Um eine exakte Entfernungsbestimmung zwischen dem an der Traverse angeordneten wenigstens einen Radarreflektor einerseits und dem Radarsensor andererseits vorteilhaft automatisch vorzunehmen, kann vorgesehen sein, dass vor der eigentlichen Funktionsprüfung des Radarsensors der Abstand zwischen der Traverse und den ersten Laserquellen und/ oder der Abstand zwischen der Traverse und der zweiten Laserquelle automatisch, zum Beispiel mittels einer Lasermesseinrichtung ermittelt wird. Bei Abweichung des festgestellten Abstandes von einem Sollwert, kann eine Korrektur am Abstand der Traverse oder eine Korrektur an dem von dem Radarsensor aufgefangenen Radarechosignal vor dessen Überprüfung vorgenommen werden, so dass im ersten Fall eine Abstandsabweichung direkt ausgeglichen wird und im zweiten Fall indirekt durch einen Korrekturfaktor. Bewerkstelligt wird die Abstandsmessung wie erwähnt vorteilhaft zum Beispiel mittels bekannter Laserabstandsmesseinrichtungen, da die Laserquellen ohnehin bereits vorhanden sind. Die Ausgangswerte der Lasermesseinrichtungen wirken im vorstehend angesprochenen ersten Fall über entsprechende in der Prüfanordnung vorgesehener Mittel auf die Stellmotoren zur Einstellung der Traverse, im angesprochenen zweiten Fall ermitteln in der Prüfvorrichtung vorgesehene Mittel die Abstandsabweichung und leiten davon einen Korrekturfaktor ab, mit dem das von dem Radarsensor abgegebene Signal, das von der Reflexion der Radarstrahlen durch den Radarreflektor verursacht wurde, vor dessen Vergleich mit zulässigen Werten modifiziert wird.

Um Störungen durch Gegenstände oder Personen, die sich bei Durchführung der Funktionsprüfung im Strahlungsbereich des Radarsensors befinden, möglichst zu minimieren, können verschiedene Maßnahmen ergriffen werden. So kann die Traverse so ausgebildet sein, dass diese ein möglichst kleines Radarecho erzeugt. Hierzu ist die Traverse entweder so geformt, dass die vom Radarsensor emittierten Radarstrahlen in andere Richtungen als zu dem Radarsensor zurück reflektieret oder die Traverse besteht aus einem Material, das Radarstrahlen absorbiert. Selbstverständlich sind auch Kombinationen denkbar. Weiter besteht die Möglichkeit, eine für den Radarsensor weitgehend "unsichtbare" Traverse der vorstehend beschriebenen Art wandförmig auszubilden, derart, dass dies den gesamten Abstrahlbereich des Radarsensors überdeckt, so dass dahinter befindliche Gegenstände und Personen keinen Einfluss auf den Funktionstest haben. Selbstverständlich sind diese Abschirmmaßnahmen nicht an die Verwendung der Traverse als Abschirmung gebunden, es ist vielmehr jede Form der Abschirmung denkbar.

Schließlich besteht im Zusammenhang mit der Vermeidung von Störungen durch die Testumgebung auch noch die Möglichkeit, die Sendeleistung des Radarsensors und damit seine Reichweite gegenüber den Normalbedingungen im späteren Fahrbetrieb so zu reduzieren, dass Personen oder Gegenstände jenseits einer definierten Entfernung keinen Einfluss auf die Funktionsprüfung haben. Selbstverständlich kann auch diese Maßnahme mit den vorstehend erwähnten Maßnahmen kombiniert werden.

Die vorstehend beschriebene Anordnung sowie das beschriebene Verfahren lassen sich vorteilhaft allgemein in der Produktion von Kraftfahrzeugen insbesondere auch in der Produktion von Nutzfahrzeugen einsetzen.

Weitere Ausgestaltungen und Vorteile der Erfindung werden nachfolgend anhand der Zeichnungen näher erläutert, es zeigen:
- Fig. 1: Eine Prinzipdarstellung einer Anordnung zur Funktionsprüfung eines Radarsensors während des Produktionsvorgangs in Frontansicht
- Fig. 2: Eine Prinzipdarstellung einer Anordnung zur Funktionsprüfung eines Radarsensors während des Produktionsvorgangs in Draufsicht.

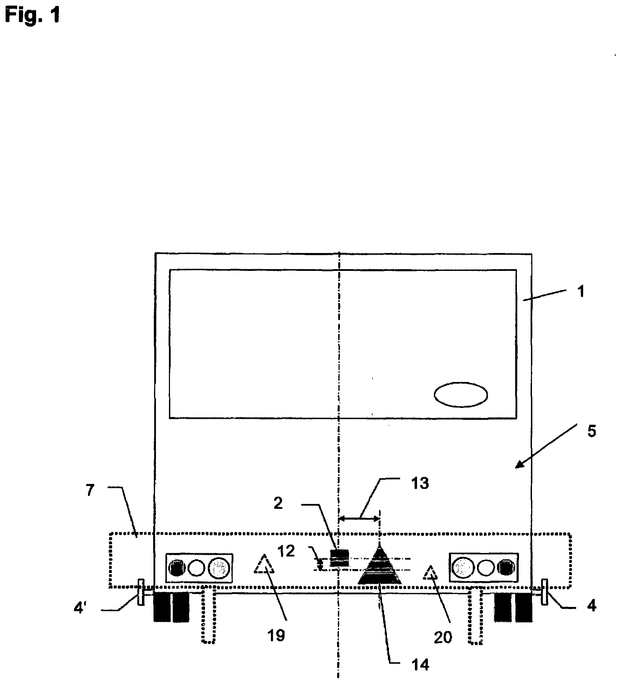

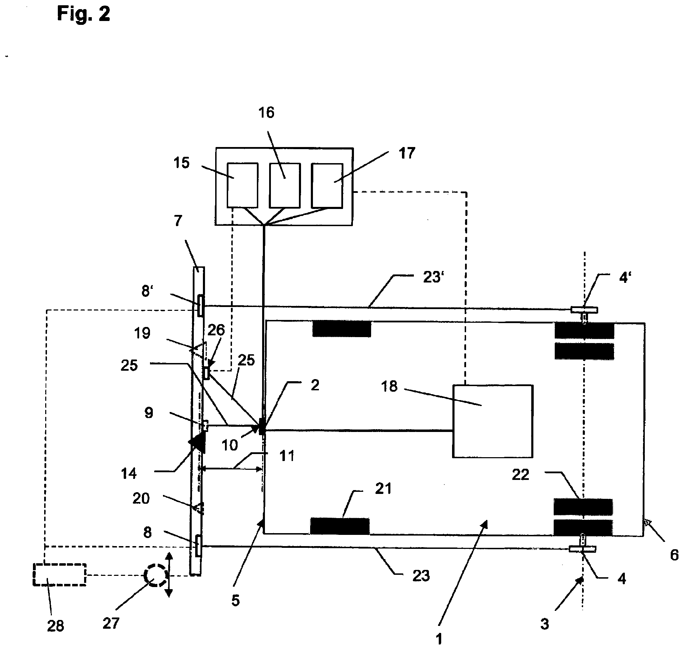

Die Darstellung in Fig. 1 und Fig.2 zeigt schematisch ein Kraftfahrzeug 1, im vorliegenden Fall die Zugmaschine eines Sattelschleppers, einmal in Frontansicht (Fig.1) und einmal in Draufsicht (Fig. 2). In der nachfolgenden Beschreibung werden beide Figuren herangezogen. An der Front 5 des Kraftfahrzeugs 1 ist ein Radarsensor 2 angeordnet, der mit der Steuerung 18 des Kraftfahrzeugs 1 verbunden ist und der mittels der im Folgenden beschriebenen Prüfanordnung im Produktionsprozess auf Funktionsfähigkeit geprüft werden soll. Die Prüfanordnung umfasst zwei jeweils an der ungelenkten Achse 22 des Kraftfahrzeugs 1 angeordnete erste Laserquellen 4, 4', die mit ihren Laserstrahlen 23, 23' auf eine Traverse 7 gerichtet sind. An den Auftreffpunkten der Laserstrahlen 23, 23' befinden sich, an der Traverse 7 angeordnet, erste Zielmarken 8, 8', die zur Ausrichtung der Traverse 7 mit den Laserquellen 4, 4' zusammenwirken. Ausgerichtet wird die Traverse 7 parallel zur Drehachse 3 der ungelenkten Achse 22. Die Laserquellen 4, 4' sind dabei vorteilhaft als Laserentfernungsmesseinrichtungen ausgebildet. An der Traverse 7 sind weiter erste Justagemittel 9 ein erster Radarreflektor 14 und optional ein zweiter Radarreflektor 19 und ein dritter Radarreflektor 20 angeordnet. Wobei die Radarreflektoren 14, 19, 20 unterschiedliche räumliche Orientierung zum Radarsensor 2 aufweisen und unterschiedliche Rückstrahlcharakteristiken besitzen können. Zum Justieren des Radarsensors 2 sind an diesem zweite Justagemittel 10, sowie Einstellmittel (nicht dargestellt) vorgesehen.

Zur Durchführung der Justage und Prüfvorgänge beinhaltet die Prüfanordnung erste Mittel 15, mit deren Hilfe nach erfolgter Justierung des Radarsensors 2 eine Sperre im Radarsensor 2, die das Aussenden von Radarstrahlen verhindert, aufhebbar ist. Weiter sind in der Prüfanordnung zweite Mittel 16 enthalten die vergleichen, ob das von dem Radarreflektor 14 und gegebenenfalls von den Radarreflektoren 19 und 20 auf den Radarsensor 2 zurückreflektierte und von diesem empfangene Radarecho in einem zulässigen Bereich liegt. Schließlich sind in der Prüfanordnung dritte Mittel 17 enthalten, die den Radarsensor 2, dann wenn das vom Radarsensor 2 empfangene Radarecho in einem zulässigen Bereich liegt, in einen Bereitschaftszustand schalten, in dem der Radarsensor 2 keine Radarstrahlen aussendet, aber von der Steuerung 18 des Kraftfahrzeugs 1 aktivierbar ist und die den Radarsensor 2 in einen nicht von der Steuerung 18 des Kraftfahrzeugs 1 aktivierbaren Zustand schalten, wenn das vom Radarsensor 2 empfangene Radarecho in einem nicht zulässigen Bereich liegt.

Zur Durchführung der Funktionsprüfung des Radarsensors 2 unter Produktionsbedingungen sind eine Reihe von Verfahrensschritten zu absolvieren. Zunächst muss die gesamte Prüfanordnung relativ zum Kraftfahrzeug 1 justiert werden. Hierzu wird die Traverse 7 mittels der Laserquellen 4, 4' einerseits und der ersten Zielmarken 8, 8' an der Traverse 7 so ausgerichtet so ausgerichtet, dass die Laserstrahlen 23, 23 exakt auf die Zielmarken 8, 8' zeigen. Ist die Distanz zwischen den Laserquellen 4, 4' und den Zielmarken 8, 8' bei exakter Ausrichtung der Zielmarken 8, 8' auf die Laserstrahlen 23, 23' gleich nimmt die Traverse 7 eine Position parallel zur Drehachse 3 der ungelenkten Achse 22 ein. Bei dieser Ausrichtung liegen die an der Traverse 7 angeordneten ersten Justiermittel 9 automatisch einem vorbestimmten Punkt des Kraftfahrzeugs 1 gegenüber.

Nach erfolgter Ausrichtung der Prüfanordnung zum Kraftfahrzeug 1 erfolgt in einem zweiten Verfahrensschritt die Justage des Radarsensors 2 relativ zum Kraftfahrzeug 1. Hierzu ist der Laserstrahl 25 einer in den ersten Justiermitteln 9 enthaltenen, an der Traverse 7 angeordneten Laserquelle (nicht dargestellt) auf die zweiten Justiermittel 10 an dem Radarsensor 2 gerichtet. Die zweiten Justagemittel 10 umfassen dabei einen Spiegel, der zum Beispiel gestellfest so am Radarsensor 2 angeordnet ist, dass bei korrekt justiertem Radarsensor 2 der reflektierte Laserstrahl 25' exakt auf den Mittelpunkt einer entsprechend an der Traverse 7 angeordneten zu den ersten Justagemittel 9 gehörenden zweiten Zielmarke 26 fällt. Die Justage des Radarsensors 2 erfolgt dabei über Einstellmittel mittels der die Position und Neigung des Radarsensors 2 relativ zum Kraftfahrzeug 1 in allen Raumrichtungen veränderbar ist. Alternativ zur gestellfesten Anordnung könnte der Spiegel aber beispielsweise auch mittels eines Aufsatzes über Fixpunkte am Radarsensor für die Justage angeordnet sein. Ebenso besteht die Möglichkeit, einen Sensor als Radarsensor zu verwenden, der den oder die vorgegebenen Dejustagewinkel im Sensor selbst hinterlegt hat, so dass dann die Winkel eingestellt werden müssen und nicht in den Nullpunkt justiert werden muss bzw. darf. Hierbei handelt es sich somit jeweils um alternative äquivalente Ausgestaltungen.

Um nun die eigentlichen Funktionsprüfung des Radarsensors durchzuführen, muss zunächst die Einschaltsperre des Radarsensors aufgehoben werden. Hierzu wird in einem dritten Verfahrensschritt mittels in der Prüfanordnung enthaltener erster Mittel 15 ein entsprechendes Signal an den Radarsensors 2 übertragen so dass die Sperre aufgehoben und der Radarsensor 2 in Betrieb gesetzt wird. In diesem Schaltzustand sendet der Radarsensor Radarstrahlen aus.

In der eigentliche Funktionsprüfung wird in einem vierten Verfahrensschritt mit Hilfe in der Prüfanordnung enthaltener zweiter Mittel 16 das von den an der Traverse 7 angeordneten Radarreflektoren 14 (und gegebenenfalls 19, 20) auf den Radarsensor 2 zurückreflektierte Radarecho, das der Radarsensor in ein digitales Signal umsetzt , abgerufen und dahingehend überprüft, ob es in einem vorgegebenen Toleranzbereich liegt. Je nach Ergebnis dieser Prüfung wird unter hinzuziehen dritter Mittel 17 unterschiedlich verfahren. Liegt das empfangene Radarecho in einem vorgegebenen Toleranzbereich, schalten die dritten Mittel 17 den Radarsensor 2 in einen Bereitschaftszustand, in dem der Radarsensor 2 keine Radarstrahlen aussendet, aber von der Steuerung 18 des Kraftfahrzeugs 1 aktivierbar ist. Liegt das empfangene Radarecho nicht in einem vorgegebenen Toleranzbereich, schalten die dritten Mittel 17 den Radarsensor 2 in einen Zustand in dem er gesperrt ist, also keine Radarstrahlen aussendet und insbesondere nicht von der Steuerung 18 des Kraftfahrzeugs 1 aktivierbar ist.

Wie bereits an anderer Stelle ausgeführt handelt es sich bei den ersten Mitteln 15, zweiten Mitteln 16 und dritten Mitteln 17 um eine programmierbare Steuereinheit zum Beispiel einen Computer, der die einzelnen Verfahrensschritte programmgestützt durchführt.

Um eine Automatisierung der vorstehend beschriebenen Justage der Traverse 7 zum Kraftfahrzeug 1 zu erreichen, besteht die Möglichkeit, die Zielmarken 8, 8' als aus einer Vielzahl lichtempfindlicher Elemente bestehende Felder oder Zeilen auszubilden und diese mit einer Steuereinrichtung zur Ansteuerung eines Stellmotors zu verbinden. Mit einer solchen Anordnung lässt sich der Stellmotor so ansteuern, dass abhängig davon, welches der Einzelelemente von den Laserstrahlen aktuell beaufschlagt wird, dieser die Traverse so positioniert, dass ein vorbestimmtes Einzelelement vom Laserstrahl getroffen wird.

Entsprechend kann bei der Justage des Radarsensors verfahren werden. Beinhaltet die zweite Zielmarke ein lichtempfindliches Element, kann bei Beaufschlagung dieses lichtempfindlichen Elementes der Justagevorgang als erfolgreich beendet definiert werden und durch Beaufschlagung der ersten Mittel 15 mit einem Signal die Sperre des Radarsensors 2 aufgehoben werden.

Für den Fall, dass eine exakte Entfernungsbestimmung zwischen dem Radarsensor und der Traverse erforderlich ist, kann die zweite Laserquelle als Laserentfernungsmesser ausgebildet sein, so dass bei Entfernungsabweichungen von einem Sollwert die Position der Traverse entsprechend korrigiert werden kann. Auch eine solche Korrektur kann automatisch erfolgen, wenn eine entsprechende Ansteuerung für einen oder mehrere Stellmotoren an der Traverse vorgesehen ist, die die Entfernungsabweichungen auf Null regelt.

Als Alternative besteht die Möglichkeit aus den Entfernungsabweichungen einen Korrekturwert abzuleiten, mit dem das aufgrund des Radarechos vom Radarsensor 2 zur Verfügung gestellte Signal modifiziert wird, bevor der Vergleich durch die zweiten Mittel 16 mit einem Sollwert erfolgt.

## Patentansprüche

1. Verfahren zur Identifizierung von nicht funktionsfähigen Radarsensoren im Produktionsprozess eines Kraftfahrzeugs, wobei eine Prüfanordnung zur Sicherstellung der Funktionssicherheit eines an der Front (5) oder am Heck (6) des Kraftfahrzeugs (1) verbauten Radarsensors (2) im Produktionsprozess des Kraftfahrzeugs (1) betrieben wird, wobei der Radarsensor (2) eine Sperre enthält, die das Aussenden von Radarstrahlen erst dann zulässt, wenn der Radarsensor (2) in Bezug zum Kraftfahrzeug (1) justiert ist, **dadurch gekennzeichnet, dass**
- die Prüfanordnung in einer maßlich definierten Zuordnung zur Drehachse (3) einer nicht gelenkten Achse (22) des Kraftfahrzeugs (1) jeweils zu beiden Seiten des Kraftfahrzeugs (1) jeweils eine Laserquelle (4, 4') aufweist, die senkrecht zur Erstreckungsrichtung der Drehachse(3) auf eine vor der Fahrzeugfront (5) oder hinter dem Fahrzeugheck (6) angebrachten in ihrer Ausrichtung zum Kraftfahrzeug (1) verstellbaren Traverse (7) gerichtet sind und mit Zielmarken (8, 8') an der Traverse (7) zusammenwirkt, derart, dass die Traverse (7) exakt zur Drehachse (3) und zu den Laserquellen (4, 4') ausrichtbar ist,
- an der Traverse (7) erste Justiermittel (9) gestellfest angeordnet sind, die mit an dem Radarsensor (2) angeordneten zweiten Justiermitteln (10) zusammenwirken, derart, dass der Radarsensor (2) im ausgeschalteten Zustand exakt mittels Einstellmitteln so zum Kraftfahrzeug (1) ausrichtbar ist, dass im späteren Betrieb des Radarsensors (2) eine vorgegebene Abstrahlcharakteristik erreicht wird,
- in einem ersten Verfahrensschritt die Traverse (7) mittels der Laserquellen (4, 4') einerseits und der Zielmarken (8, 8') an der Traverse (7) andererseits so ausgerichtet wird, dass die Traverse (7) eine Position parallel zur Drehachse (3) einnimmt und die an der Traverse (7) angeordneten ersten Justiermittel (9) einem vorbestimmten Punkt des Kraftfahrzeugs (1) gegenüber liegen,
- in einem zweiten Verfahrensschritt mittels der ersten Justiermittel (9) an der Traverse (7) und der zweiten Justiermittel (10) an dem Radarsensor (2) der Radarsensor (2) mittels der Einstellmitteln so justiert wird, dass er eine exakt definierte Position gegenüber der Traverse (7) einnimmt,
- an der Traverse (7) in einem definierten Abstand (11) und einer definierten richtungsmäßigen Orientierung (12, 13) zum Strahlungszentrum des Radarsensors (2) wenigstens ein Radarreflektor (14) mit definierter Rückstrahlcharakteristik angeordnet ist,
- die Prüfanordnung erste Mittel enthält, mit deren Hilfe nach erfolgter Justierung des Radarsensors (2) die Sperre, die das Aussenden von Radarstrahlen verhindert, aufhebbar ist,
- in einem dritten Verfahrensschritt mittels der in der Prüfanordnung enthaltenen ersten Mittel (15) die Einschaltsperre des Radarsensors (2) aufgehoben wird, derart, dass der Radarsensor (2) in Betrieb gesetzt wird und Radarstrahlen aussendet,
- die Prüfanordnung zweite Mittel enthält, die in einem vierten Verfahrensschritt vergleichen, ob das von dem wenigstens einen Radarreflektor (14) auf den Radarsensor (2) zurückreflektierte und von diesem empfangene Radarecho in einem vorgegebenen Toleranzbereich als zulässigen Bereich liegt, und
- in dem vierten Verfahrensschritt zudem der Radarsensor (2) dann, wenn das empfangene Radarecho in dem zulässigen Bereich liegt, mittels dritter Mittel (17) der Prüfanordnung in einen Bereitschaftszustand geschaltet wird, in dem der Radarsensor (2) keine Radarstrahlen aussendet, aber von der Steuerung des Kraftfahrzeugs (1) aktivierbar ist, und der Radarsensor (2) mittels der dritten Mittel (17) in einen nicht von der Steuerung des Kraftfahrzeugs (1) aktivierbaren Zustand geschaltet wird, wenn das vom Radarsensor (2) empfangene Radarecho nicht in dem zulässigen Bereich liegt.

2. Verfahren nach Anspruch 1, **dadurch gekennzeichnet, dass** an der Traverse (7) jeweils in einem definierten Abstand und jeweils einer definierten richtungsmäßigen Orientierung zum Strahlungszentrum des Radarsensors (2) wenigstens mehrere Radarreflektoren (14, 19, 20) mit definierter Rückstrahlcharakteristik angeordnet sind.

3. Verfahren nach Anspruch 2, **dadurch gekennzeichnet, dass** die Radarreflektoren (14, 19, 20) unterschiedliche Rückstrahlcharakteristiken aufweisen.

4. Verfahren nach Anspruch 3, **dadurch gekennzeichnet, dass** die Radarreflektoren (14, 19, 20) unterschiedliche, die Rückstrahlcharakteristik definierende Formen und/ unterschiedliche Größen und/ oder unterschiedliche Materialien aufweisen.

5. Verfahren nach einem der vorhergehenden Ansprüche, **dadurch gekennzeichnet, dass** es sich bei den Radarreflektoren (14, 19, 20) um Tripel-Spiegel handelt.

6. Verfahren nach Anspruch 1, **dadurch gekennzeichnet, dass** die ersten Justagemittel (9) aus einer Laserstrahlungsquelle und einer zweiten Zielmarke bestehen, und dass die zweiten Justagemittel (10) durch einen gestellfest mit dem Radarsensor (2) verbundenen Spiegel gebildet sind.

7. Verfahren nach Anspruch 1, **dadurch gekennzeichnet, dass** die ersten Justagemittel (9) eine zweite Zielmarke aufweisen und die zweiten Justagemittel (10) aus einer an dem Radarsensor (2) gestellfest angeordneten Laserquelle gebildet sind.

8. Verfahren nach einem der Ansprüche 6 oder 7, **dadurch gekennzeichnet, dass** die in den ersten Justagemitteln (9) enthaltene zweite Zielmarke ein lichtempfindliches Element umfasst, das beim Einfall des Laserstrahls (25) ein elektrisches Signal abgibt.

9. Verfahren nach Anspruch 1, **dadurch gekennzeichnet, dass** die ersten Zielmarken (8, 8') je ein lichtempfindliches Element umfassen, das beim Einfall des Laserstrahls (23, 23') ein elektrisches Signal abgibt.

10. Verfahren nach Anspruch 1, **dadurch gekennzeichnet, dass** die, der ersten Drehachse (3) des Kraftfahrzeugs (1) zugeordneten Laserquellen (4, 4') und/oder die ersten Justagemittel (9) oder zweiten Justagemittel (10) eine Längenmesseinrichtung mit umfassen.

11. Verfahren nach Anspruch 1, **dadurch gekennzeichnet, dass** die ersten Zielmarken (8, 8') je wenigstens ein lichtempfindliches Element umfassen, das beim Einfall des Laserstrahls (23, 23') ein elektrisches Signal abgibt, dass die Traverse (7) mittels Stellmotoren (27) zumindest horizontal verstellbar ist, und dass in der Prüfanordnung ein Regelmechanismus (28) vorgesehen ist, der die Stellmotoren (27) so ansteuert, dass die elektrischen Signale der lichtempfindlichen Elemente einem vorgegebenen Signal entsprechen.

12. Verfahren nach einem der Ansprüche 6 bis 8, **dadurch gekennzeichnet, dass** die zweite, in den ersten Justagemitteln (9) enthaltene Zielmarke wenigstens ein lichtempfindliches Element umfasst, das beim Einfall des Laserstrahls (25) ein elektrisches Signal abgibt, und dass bei Vorliegen eines vorgegebenen Signals mittels der in der Prüfanordnung enthaltenen ersten Mittel die Einschaltsperre des Radarsensors (2) aufgehoben wird.

13. Verfahren nach Anspruch 1, 7 oder 8, **dadurch gekennzeichnet, dass** vor dem dritten Verfahrensschritt der Abstand zwischen der Traverse (7) und den, der Drehachse (3) des Kraftfahrzeugs (1) zugeordneten Laserquellen (4, 4') und/oder der Abstand zwischen der Traverse (7) und der Laserquelle des zweiten Justagemittels vermessen wird.

14. Verfahren nach Anspruch 13, **dadurch gekennzeichnet, dass** bei Abweichung des festgestellten Abstandes von einem Sollwert eine Korrektur am Abstand der Traverse (7) oder eine Korrektur an dem von dem Radarsensor (2) aufgrund des aufgefangenen Radarechos abgegebenen Signals vor dessen Überprüfung vorgenommen wird.

## Claims

1. Method for identifying non-functionally-capable radar sensors in the production process of a motor vehicle, wherein a test arrangement for ensuring the functional reliability of a radar sensor (2) which is installed at the front (5) or at the rear (6) of the motor vehicle (1) is operated in the production process of the motor vehicle (1), wherein the radar sensor (2) contains a locking means which does not permit the emission of radar beams until the radar sensor (2) is aligned with respect to the motor vehicle (1), **characterized in that**
- the test arrangement has, in a dimensionally defined assignment to the rotational axis (3) of a non-steered axle (22) of the motor vehicle (1), in each case one laser source (4, 4') on each of the two sides of the motor vehicle (1), which laser sources (4, 4') are directed, perpendicularly with respect to the direction of extent of the rotational axis (3), toward a crossmember (7) which is mounted in front of the front (5) of the vehicle or behind the rear (6) of the vehicle and adjustable in terms of its orientation with respect to the motor vehicle (1), and interacts with target marks (8, 8') on the crossmember (7) in such a way that the crossmember (7) can be oriented precisely with respect to the rotational axis (3) and with respect to the laser sources (4, 4'),
- first adjustment means (9) are arranged on the crossmember (7) in such a way that they are fixed to the frame and interact with second adjustment means (10) arranged on the radar sensor (2), in such a way that in the switched-off state the radar sensor (2) can be oriented precisely with respect to the motor vehicle (1) by means of setting means, in such a way that during the later operation of the radar sensor (2) a prescribed irradiation characteristic is achieved,
- in a first method step the crossmember (7) is oriented, on the one hand, by means of the laser sources (4, 4') and, on the other hand, by means of the target marks (8, 8') on the crossmember (7), in such a way that the crossmember (7) assumes a position parallel to the rotational axis (3), and the first adjustment means (9) which are arranged on the crossmember (7) lie opposite a predetermined point on the motor vehicle (1),
- in a second method step the radar sensor (2) is adjusted by means of the setting means, by means of the first adjustment means (9) on the crossmember (7) and the second adjustment means (10) on the radar sensor (2), in such a way that said radar sensor (2) assumes a precisely defined position with respect to the crossmember (7),
- at least one radar reflector (14) with a defined back radiation characteristic is arranged on the crossmember (7) at a defined distance (11) and with a defined directional orientation (12, 13) with respect to the radiation centre of the radar sensor (2),
- the test arrangement contains first means which can be used, after adjustment of the radar sensor (2) has taken place, to release the locking means which prevent the emission of radar beams,
- in a third method step the switch-on locking means of the radar sensor (2) is released by means of the first means (15) contained in the test arrangement, in such a way that the radar sensor (2) is activated and emits radar beams,
- the test arrangement contains second means which, in a fourth method step, compare whether the radar echo which is reflected back to the radar sensor (2) by the at least one radar reflector (14) and is received by said radar sensor (2) lies in a prescribed tolerance range as a permissible range, and
- in the fourth method step when the received radar echo is in the permissible range the radar sensor (2) is additionally switched, by means of a third means (17) of the test arrangement, into a state of readiness in which the radar sensor (2) does not emit any radar beams but can be activated by the controller of the motor vehicle (1), and the radar sensor (2) is switched, by means of the third means (17), into a state which cannot be activated by the controller of the motor vehicle (1), if the radar echo which is received by the radar sensor (2) is not in the permissible range.

2. Method according to Claim 1, **characterized in that** at least a plurality of radar reflectors (14, 19, 20) with a defined back radiation characteristic are arranged on the crossmember (7), each at a defined distance and each with a defined direction of orientation with respect to the radiation centre of the radar sensor (2).

3. Method according to Claim 2, **characterized in that** the radar reflectors (14, 19, 20) have different back radiation characteristics.

4. Method according to Claim 3, **characterized in that** the radar reflectors (14, 19, 20) have different shapes and/or different sizes and/or different materials which define the back radiation characteristic.

5. Method according to one of the preceding claims, **characterized in that** the radar reflectors (14, 19, 20) are triple mirrors.

6. Method according to Claim 1, **characterized in that** the first adjustment means (9) are composed of a laser radiation source and a second target mark, and **in that** the second adjustment means (10) are formed by a mirror which is connected to the radar sensor (2) in such a way that it is fixed to the frame.

7. Method according to Claim 1, **characterized in that** the first adjustment means (9) have a second target mark, and the second adjustment means (10) are formed from a laser source which is arranged on the radar sensor (2) in such a way that it is fixed to the frame.

8. Method according to one of Claims 6 and 7, **characterized in that** the second target mark which is contained in the first adjustment means (9) comprises a light-sensitive element which outputs an electrical signal when the laser beam (25) is incident.

9. Method according to Claim 1, **characterized in that** the first target marks (8, 8') each comprise a light-sensitive element which outputs an electrical signal when the laser beam (23, 23') is incident.

10. Method according to Claim 1, **characterized in that** the laser sources (4, 4') which are assigned to the first rotational axis (3) of the motor vehicle (1) and/or the first adjustment means (9) or second adjustment means (10) also comprise a length measuring device.

11. Method according to Claim 1, **characterized in that** the first target marks (8, 8') each comprise at least one light-sensitive element which outputs an electrical signal when the laser beam (23, 23') is incident, **in that** the crossmember (7) is at least horizontally adjustable by means of servomotors (27), and **in that** a control mechanism (28) is provided in the test arrangement, which control mechanism (28) actuates the servomotors (27) in such a way that the electrical signals of the light-sensitive elements correspond to a prescribed signal.

12. Method according to one of Claims 6 to 8, **characterized in that** the second target mark which is contained in the first adjustment means (9) comprises at least one light-sensitive element which outputs an electric signal when the laser beam (25) is instant, and **in that** when a prescribed signal is present the switch-on locking means of the radar sensor (2) is released by means of the first means which are contained in the test arrangement.

13. Method according to Claim 1, 7 or 8, **characterized in that** before the third method step the distance between the crossmember (7) and the laser sources (4, 4') which are assigned to the rotational axis (3) of the motor vehicle (1) and/or the distance between the crossmember (7) and the laser source of the second adjustment means are/is measured.

14. Method according to Claim 13, **characterized in that** when the detected distance deviates from a setpoint value a correction is performed to the distance from the crossmember (7) or a correction is performed to the signal, output by the radar sensor (2) on the basis of the radar echo which is picked up, before said signal is tested.

## Revendications

1. Procédé d'identification de capteurs radar non fonctionnels dans le processus de production d'un véhicule automobile, un dispositif de test destiné à assurer la sécurité fonctionnelle d'un capteur radar (2) installé à l'avant (5) ou à l'arrière (6) du véhicule automobile (1) étant utilisé dans le processus de production du véhicule automobile (1), le capteur radar (2) contenant une barrière qui permet l'émission de faisceaux radar uniquement lorsque le capteur radar (2) est réglé par rapport au véhicule automobile (1), **caractérisé en ce que**
- le dispositif de test comporte, dans une association dimensionnellement définie avec l'axe de rotation (3) d'un essieu non directeur (22) du véhicule automobile (1), de chaque côté du véhicule automobile (1), une source laser (4, 4') qui est orientée, perpendiculairement à la direction d'extension de l'axe de rotation (3), sur une traverse (7) montée à l'avant (5) du véhicule ou à l'arrière (6) du véhicule dans son orientation par rapport au véhicule automobile (1) et coopère avec des repères cibles (8, 8') placés sur la traverse (7) de sorte que la traverse (7) puisse être orientée exactement par rapport l'axe de rotation (3) et aux sources laser (4, 4'),
- des premiers moyens de réglage (9) sont disposés de manière fixe sur la traverse (7), lesquels coopèrent avec des deuxièmes moyens de réglage (10) disposés au niveau du capteur radar (2) de sorte que le capteur radar (2) peut être orienté exactement, à l'état désactivé, par rapport au véhicule automobile (1) à l'aide de moyens de réglage de manière à obtenir une caractéristique de rayonnement prédéterminée lors du fonctionnement ultérieur du capteur radar (2),
- dans une première étape de procédé, la traverse (7) est orientée à l'aide des sources laser (4, 4') d'une part et des repères cibles (8, 8') au niveau de la traverse (7) d'autre part de sorte que la traverse (7) occupe une position parallèle à l'axe de rotation (3) et les premiers moyens de réglage (9), disposés au niveau de la traverse (7), sont situés en face d'un point prédéterminé du véhicule automobile (1),
- dans une deuxième étape de procédé, le capteur radar (2) est réglé à l'aide des premiers moyens de réglage (9) au niveau de la traverse (7) et des deuxièmes moyens de réglage (10) au niveau du capteur radar (2) de manière à occuper une position précisément définie par rapport à la traverse (7),
- au niveau de la traverse (7), au moins un réflecteur radar (14) présentant une caractéristique de réflexion définie est disposé à une distance définie (11) et à une orientation directionnelle définie (12, 13) par rapport au centre de rayonnement du capteur radar (2),
- le dispositif de test contient des premiers moyens à l'aide desquels le blocage empêchant l'émission de faisceaux radar peut être supprimé après le réglage du capteur radar (2),
- dans une troisième étape de procédé, le blocage de l'activation du capteur radar (2) est supprimé à l'aide des premiers moyens (15) contenus dans le dispositif de test de sorte que le capteur radar (2) soit mis en service et émette des faisceaux radar,
- le dispositif de test contient des deuxièmes moyens qui effectuent une comparaison dans une quatrième étape de procédé pour savoir si l'écho radar, réfléchi par l'au moins un réflecteur radar (14) en direction du capteur radar (2) et reçu par celui-ci, se trouve dans une zone de tolérance prédéterminée désignée par zone admissible, et
- en outre, dans la quatrième étape de procédé, le capteur radar (2) est commuté, seulement lorsque l'écho radar reçu se trouve dans la zone admissible, à l'aide des troisièmes moyens (17) du dispositif de test dans un état de veille dans lequel le capteur radar (2) n'émet pas de faisceaux radar, mais peut être activé par la commande du véhicule automobile (1) et le capteur radar (2) est commuté à l'aide des troisièmes moyens (17) dans un état non activable par la commande du véhicule automobile (1) lorsque l'écho radar par le capteur radar (2) ne se trouve pas dans la zone admissible.

2. Procédé selon la revendication 1, **caractérisé en ce qu'**au moins une pluralité de réflecteurs radar (14, 19, 20) présentant une caractéristique de réflexion définie sont disposés sur la traverse (7) à une distance définie et à une orientation définie par rapport au centre de rayonnement du capteur radar (2).

3. Procédé selon la revendication 2, **caractérisé en ce que** les réflecteurs radar (14, 19, 20) présentent des caractéristiques de réflexion différentes.

4. Procédé selon la revendication 3, **caractérisé en ce que** les réflecteurs radar (14, 19, 20) présentent différentes formes et/ou différentes dimensions et/ou différents matériaux définissant les caractéristiques de réflexion.

5. Procédé selon l'une des revendications précédentes, **caractérisé en ce que** les réflecteurs radar (14, 19, 20) sont des miroirs triples.

6. Procédé selon la revendication 1, **caractérisé en ce que** les premiers moyens de réglage (9) comprennent une source de rayonnement laser et un deuxième repère cible et **en ce que** les deuxièmes moyens de réglage (10) sont formés par un miroir relié de manière fixe au capteur radar (2).

7. Procédé selon la revendication 1, **caractérisé en ce que** les premiers moyens de réglage (9) comportent un deuxième repère cible et **en ce que** les deuxièmes moyens de réglage (10) sont formés d'une source laser disposée de manière fixe sur le capteur radar (2).

8. Procédé selon l'une des revendications 6 et 7, **caractérisé en ce que** le deuxième repère cible, contenu dans les premiers moyens de réglage (9), comprend un élément photosensible qui émet un signal électrique lorsque le faisceau laser (25) est incident.

9. Procédé selon la revendication 1, **caractérisé en ce que** les premiers repères cibles (8, 8') comprennent chacun un élément photosensible qui émet un signal électrique lorsque le faisceau laser (23, 23') est incident.

10. Procédé selon la revendication 1, **caractérisé en ce que** les sources laser (4, 4') associées au premier axe de rotation (3) du véhicule automobile (1) et/ou les premiers moyens de réglage (9) ou les deuxièmes moyens de réglage (10) comprennent un dispositif de mesure de longueur.

11. Procédé selon la revendication 1, **caractérisé en ce que** les premiers repères cibles (8, 8') comprennent chacun au moins un élément photosensible qui émet un signal électrique lorsque le faisceau laser (23, 23') est incident, **en ce que** la traverse (7) est réglable au moins horizontalement à l'aide de servomoteurs (27) et **en ce qu'**un mécanisme de commande (28) est prévu dans le dispositif de test pour commander les servomoteurs (27) de sorte que les signaux électriques des éléments photosensibles correspondent à un signal prédéterminé.

12. Procédé selon l'une des revendications 6 à 8, **caractérisé en ce que** le deuxième repère cible contenu dans les premiers moyens de réglage (9) comprend au moins un élément photosensible qui émet un signal électrique lorsque le faisceau laser (25) est incident et **en ce que**, en présence d'un signal prédéterminé, le blocage de l'activation du capteur radar (2) est supprimé à l'aide des premiers moyens contenus dans le dispositif de test.

13. Procédé selon la revendication 1, 7 ou 8, **caractérisé en ce que** la distance entre la traverse (7) et les sources laser (4, 4') associées à l'axe de rotation (3) du véhicule automobile (1) et/ou la distance entre la traverse (7) et la source laser des deuxièmes moyens de réglage est mesurée avant la troisième étape de procédé.

14. Procédé selon la revendication 13, **caractérisé en ce que**, en cas d'écart entre la distance déterminée et une valeur de consigne, une correction de la distance de la traverse (7) ou une correction du signal délivré par le capteur radar (2) en raison de l'écho radar reçu est effectuée avant sa vérification.
